# EUROPEAN PATENT APPLICATION

(11) **EP 1 251 447 A1**
(43) Date of publication of application: **23.10.2002**
(21) Application number: 02252725.3
(22) Date of filing: 17.04.2002
(51) Int. Cl.: G06F 17/60

(54) **Terminal device combining mails stored in a storage and transmitting the combined mail to an information apparatus**

(30) Priority: 18.04.2001 JP 2001120085
(71) Applicant: Ricoh Company, Tokyo 143-8555 (JP)
(72) Inventor: Takahashi, Masakatsu, Atsugi-shi, Kanagawa (JP)
(74) Representative: Leeming, John Gerard

(57) **Abstract**

This terminal device comprises a transmission and reception unit (1) transmitting and receiving a mail, a mail storage unit (6) storing the mails received by the transmission and reception unit (1), and a mail combining unit (8) combining a plurality of the mails stored in the mail storage unit (6) so as to form one combined mail. The transmission and reception unit (1) transmits the combined mail to another information apparatus.

## Description

The present invention generally relates to a terminal device and a mail transfer method, and more particularly, to a terminal device and a mail transfer method for storing mail to be transmitted and received in a body of the terminal device.

Conventionally, electronic mail is transmitted and received not only by a personal computer installed indoors, but also by a portable personal computer, a small-size portable terminal called PDA (Personal Digital Assistant), a PHS, and a portable phone.

However, these terminal devices are allowed a limited memory capacity for realizing miniaturization and low costs. Thereupon, in a conventional terminal device, such as a portable phone, mail has to be deleted when accumulated to a certain amount. Otherwise, a free space remaining in a memory of the terminal device falls short of a data amount of mail to be received such that the terminal device cannot receive the mail.

Japanese Laid-Open Patent Application No. 2000-244555 discloses "Electronic Mail System, Electronic Mail Keeping Device, Communication Terminal, and Storage Medium Storing Program Code" as an earlier-filed invention 1 concerning a technical field analogous to the present invention. According to the earlier-filed invention 1, electronic mail is kept in an electronic mail keeping device, and data of the electronic mail is read out to a terminal device when necessary.

Additionally, Japanese Laid-Open Patent Application No. 2000-278311 discloses "Mail Transfer Method and Terminal Device" as an earlier-filed invention 2 concerning a technical field analogous to the present invention. According to the earlier-filed invention 2, information indicating a free space remaining in a memory of a terminal device is transmitted to an information center keeping mail such that the information center transmits mail data to the terminal device according to the free space remaining in the memory.

Additionally, Japanese Laid-Open Patent Application No. 2000-311117 discloses "Data Managing Device, Portable Information Terminal, and Computer Readable Recording Medium" as an earlier-filed invention 3 concerning a technical field analogous to the present invention. According to the earlier-filed invention 3, when a terminal device receives a mail without sufficient free space remaining in a memory of the terminal device for accommodating a data amount of the mail, an oldest mail stored in the memory is automatically deleted while a latest mail of each sender is protected.

However, conventional terminal devices have problems as follows. Since the terminal devices have a small and thus limited memory, mails received and stored therein have to be deleted when accumulated to a certain amount. In order to deal with a case where the stored mails include important mails that cannot be deleted, there are two conventional methods.
(1) A user of the terminal device selects and transfers mails one by one to a mail address of a personal computer of the user's own.
(2) A user of the terminal device connects the terminal device with a personal computer by a dedicated-purpose cable, and transfers mail data to the personal computer.

However, the two conventional methods have respective defects as follows.

The method (1) : Since the user has to select and transfer mails one by one manually, this method takes labor and time in proportion with the number of the mails. In addition, this method involves a deleting task after the transferring task, taking more labor and time.

The method (2) : Since the user has to always carry the personal computer and the cable to transfer mail data to the personal computer, this method goes against mobility of the terminal device designed as a portable terminal, and thus is inconvenient. In addition, this method involves a bothersome operation including time-consuming steps of connecting the cable and starting the personal computer.

In addition, the earlier-filed invention 1 necessitates frequent exchanges of information between the terminal device and the electronic mail keeping device by means of communication. Accordingly, the invention 1 is troublesome in terms of labor and time required for establishing the communication and transmitting and receiving information therebetween.

Additionally, in the earlier-filed invention 2, when the free space remaining in the memory of the terminal device becomes smaller, mails need to be deleted one by one manually, taking labor and time. Further, mails of the user's preference need to be transferred also one by one manually to another information apparatus, taking labor and time.

Additionally, the earlier-filed invention 3 involves a risk of unread mails to be deleted when the free space remaining in the memory of the terminal device becomes smaller. Further, mails of the user's preference need to be transferred one by one manually to another information apparatus, taking labor and time.

It is a general object of the present invention to provide an improved and useful terminal device and a mail transfer method in which the above-mentioned problems are eliminated.

A more specific object of the present invention is to provide a terminal device and a mail transfer method which can transfer mail data stored therein to another information apparatus accurately and efficiently in a short time by simple operations.

In order to achieve the above-mentioned objects, there is provided according to the present invention a terminal device and a mail transfer method preferably comprising transmitting and receiving means for transmitting and receiving a mail/mails, mail storing means for storing the received mails in a storage unit of the device, received-mail selecting means for selecting the received mails, mail combining means for combining the selected mails into one combined mail, destination address setting means for setting a destination mail address for transmitting the combined mail to, and mail deleting means for deleting the selected mails from the storage unit after the formation or the transmission of the combined mail.

According to the present invention, all of the mails selected to be transferred to another information apparatus can be combined into one combined mail. Accordingly, mail data stored in such a terminal device as a portable phone can be transferred to another electronic apparatus (information apparatus) accurately and efficiently in a short time by simple operations. These simple operations enable a maximum utilization of a limited memory capacity of the small and low-cost terminal device such that a user of such a portable information terminal does not feel any inconvenience in using mail.

Other objects, features and advantages of the present invention will become more apparent from the following detailed description when read in conjunction with the accompanying drawings.
FIG.1 is a block diagram of a basic configuration of a portable phone according to an embodiment of the present invention;
FIG.2 exemplifies a mail combining process performed by a mail combining unit shown in FIG.1 according to the present embodiment; and
FIG.3 is a flowchart of an example of basic operations of the portable phone and a mail transfer method according to the present embodiment.

A description will now be given, with reference to the drawings, of embodiments of a terminal device and a mail transfer method according to the present invention.

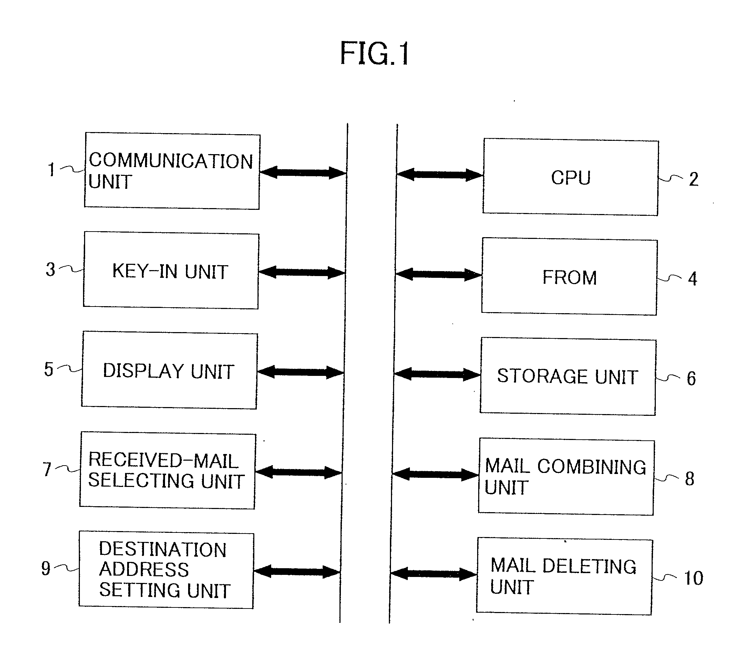

FIG.1 is a block diagram of a basic configuration of a portable phone according to an embodiment of the present invention. As shown in FIG.1, the portable phone according to the present embodiment comprises a communication unit (a transmission and reception unit) 1, a CPU 2, a key-in unit 3, a FROM 4, a display unit 5, a storage unit (a mail storage unit) 6, a received-mail selecting unit 7, a mail combining unit 8, a destination address setting unit 9, and a mail deleting unit 10.

Hereinbelow, descriptions will be given of the elements shown in FIG.1.

The communication unit 1 detects a calling signal upon receiving a call, and controls a transmission and a reception of information necessary for a communication. The CPU (Central Processing Unit) 2 controls the present terminal device (the portable phone) or a terminal system (a portable phone system) as a whole. The key-in unit 3 is used for inputting various commands to operate the terminal device.

The FROM 4 is a rewritable nonvolatile memory, which stores firmware including a program for controlling the present portable phone or the portable phone system as a whole. The CPU 2 operates according to the program stored in the FROM 4. Additionally, the FROM 4 also stores data necessary for controlling the portable phone system.

The display unit 5 is a display unit (a display apparatus), such as a liquid crystal display, which displays status of each of the elements of the portable phone, and a prompt requesting a next operation.

The storage unit 6 is used as a work area necessary for the CPU 2 to operate. Specifically, the storage unit 6 is used as a temporary storage device temporarily storing data when the CPU 2 performs the control. In addition, the storage unit 6 has a function as a buffer upon an input to the FROM 4. Further, the storage unit 6 accumulatively stores received mails, and also stores mails combined by the mail combining unit 8 as described hereinafter. The received mails are accumulatively stored by a mail storage control unit (not shown in the figures) separately managing data of a text and data of a header including a sender's mail address. In other words, the mail storage control unit and the storage unit 6 together form a functional unit for storing mail. Besides, the mail storage control unit may be provided as an independent functional unit, or may be realized as a function performed by the CPU 2.

The received-mail selecting unit 7 selectively specifies a mail/mails to be transferred to another information apparatus, from among the mails stored in the storage unit 6. Manners of selecting the mail/mails are switched according to an input provided by a user using the key-in unit 3: the mail/mails are selected all at once, or one by one, details of which will be described hereinafter.

Besides, although FIG.1 shows the received-mail selecting unit 7 as one functional unit, the process of the received-mail selecting unit 7 may be performed by the CPU 2 according to the program stored in the FROM 4. In other words, the received-mail selecting unit 7 may be realized as a function performed by the CPU 2. In this case, the selection of the mail/mails to be transferred to another information apparatus is conducted by a method, for example, of displaying a dialogue on the display unit 5 under the control of the CPU 2 so as to prompt the user to make the selection, and causing the storage unit 6 to store information concerning the selection input from the key-in unit 3.

The mail combining unit 8 combines the mails specified by the received-mail selecting unit 7 so as to transfer the mails to another information apparatus, details of which will be described hereinafter.

Besides, although FIG.1 shows the mail combining unit 8 as one functional unit, the process of the mail combining unit 8 may be performed by the CPU 2 according to the program stored in the FROM 4. In other words, the mail combining unit 8 may be realized as a function performed by the CPU 2.

The destination address setting unit 9 sets a destination mail address to which the mails combined by the mail combining unit 8 are transmitted. Besides, a telephone directory unit (a register unit) may be further provided for performing this setting, details of which will be described hereinafter.

Besides, although FIG.1 shows the destination address setting unit 9 as one functional unit, the process of the destination address setting unit 9 may be performed by the CPU 2 according to the program stored in the FROM 4. In other words, the destination address setting unit 9 may be realized as a function performed by the CPU 2. In this case, the setting of the destination mail address is conducted by a method, for example, of displaying a dialogue on the display unit 5 under the control of the CPU 2 so as to prompt the user to input the destination mail address, and causing the storage unit 6 to store information concerning the destination mail address input from the key-in unit 3.

The mail deleting unit 10 deletes the mails selected by the received-mail selecting unit 7 from the storage unit 6. Besides, a temporary retention area may be provided in the storage unit 6 in performing this deletion, details of which will be described hereinafter.

Besides, although FIG.1 shows the mail deleting unit 10 as one functional unit, the process of the mail deleting unit 10 may be performed by the CPU 2 according to the program stored in the FROM 4. In other words, the mail deleting unit 10 may be realized as a function performed by the CPU 2.

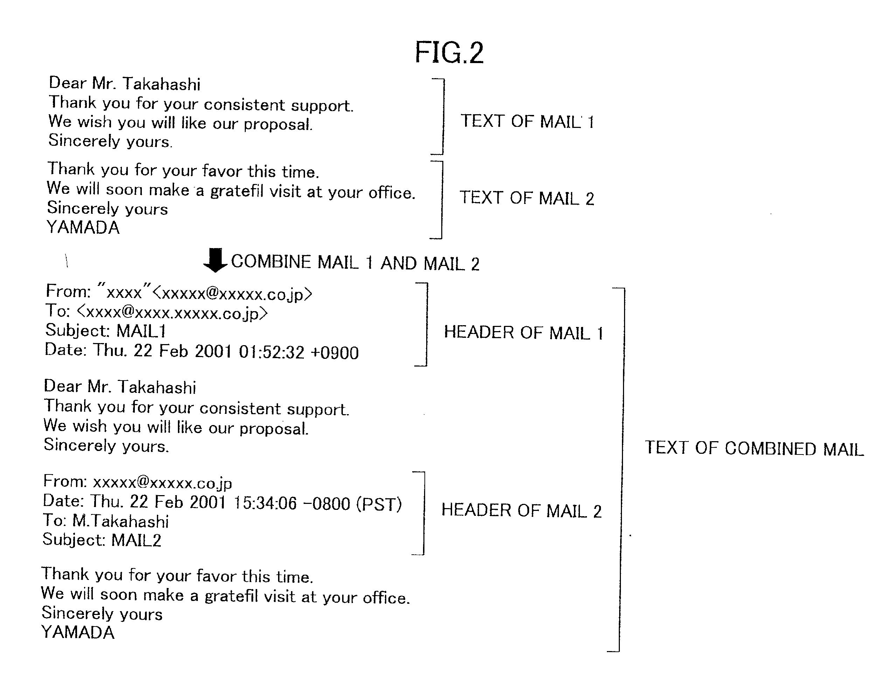

FIG.2 exemplifies a mail combining process performed by the mail combining unit 8 according to the present embodiment.

Each of the received mails include a header containing a sender's mail address, a receiver's mail address, a reception date and hour, a title, and so forth, in addition to a text of the mail. In other words, each of the stored mails comprises two parts: the header, and the text that is a substance of the mail. The mail combining unit 8 combines a plurality of pairs (units) of these two parts so as to form a text of one combined mail, as shown in FIG.2. In other words, the mail combining unit 8 extracts these two parts from each of the mails, and combines these two parts into a text of one mail.

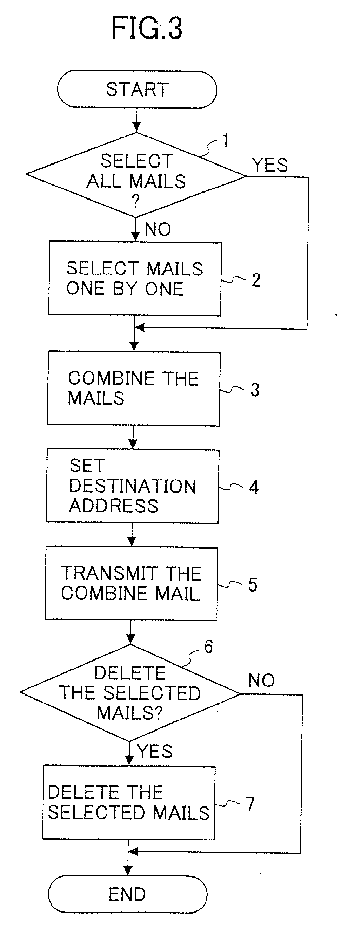

Next, a description will be given, with reference to FIG.3, of operations of the portable phone and a mail transfer method according to the present embodiment. FIG.3 is a flowchart of an example of basic operations according to the present embodiment.

Firstly, when a user transfers mail data of the portable phone according to the present embodiment to another information apparatus, the mail combining process is performed. It is noted that the mail combining process performed by the mail combining unit 8 is not a necessity; mails stored in a memory (the storage unit 6) may be separately transferred one by one to another information apparatus, without being combined.

Upon using the mail combining function in transferring mail data, there are two manners of selecting mails to be combined from among mails received by the communication unit 1. One of the two manners is that the user voluntarily selects mails to be combined, one by one. The other of the two manners is that all of the mails received by the communication unit 1 are selected at one time. The user may choose either of the two manners. Alternatively, the user may abandon means for voluntarily selecting mails one by one, from the start, and may adopt the manner of selecting all of the mails at one time so that the user does not have to perform the one-by-one selection. When adopting the manner of selecting all of the mails from the start, the user does not have to specify mails to be combined on each occasion. This further simplifies the operations for the user. Alternatively, the user may abandon the manner of selecting all of the mails at one time. In this case, the user selects mails to be combined, one by one, by keying in from the key-in unit 3. This prevents unnecessary mails from being selected. Further, a presetting function may be provided so as to preset either of the above-mentioned two manners as a default.

FIG.3 shows an example where either of the two manners is chosen.

In a case of choosing the manner of selecting all of the mails at one time, when the user chooses an all-mail select mode (step S1; YES), the received-mail selecting unit 7 selects all of the mails stored in the storage unit 6 as the mails to be combined, and a mail combining step is performed next by the mail combining unit 8. In the other case of choosing the manner of voluntarily selecting mails to be combined, one by one, the user chooses a voluntary select mode (step S1; NO), and selects the mails to be combined, one by one, by keying in from the key-in unit 3, such as operation buttons, while confirming the mails on the display unit 5, such as a liquid crystal display (step S2).

When the mails to be combined are determined, a plurality of the mails selected by the received-mail selecting unit 7 are combined into a combined mail by the mail combining unit 8 as shown in FIG.2 (step S3). A destination mail address of the combined mail to be transmitted is set by the destination address setting unit 9 (step S4). For example, this setting may be performed by keying in the mail address directly from the key-in unit 3, such as a ten-key pad, or by selecting from mail addresses registered beforehand in the hereinbelow-described telephone directory unit. Alternatively, the above-mentioned setting may not be performed upon each transmission by inputting a default mail address beforehand.

As mentioned above, the telephone directory unit may be further provided for the setting of the destination mail address performed by the destination address setting unit 9. The telephone directory unit is a register unit in which mail addresses frequently used as a destination mail address are registered beforehand. The telephone directory unit is provided as a functional unit in which frequently used mail addresses are registered beforehand by storing the mail addresses in the storage unit 6. Accordingly, a selection made by the user of a destination mail address from among the mail addresses registered beforehand enables the setting of the destination mail address performed by the destination address setting unit 9.

Additionally, mail addresses may be registered in the telephone directory unit by keying in one by one by means of the key-in unit 3. Also, upon reading a received mail, a mail address of a sender of the mail may be registered in the telephone directory unit. In addition, a list of mail addresses may be transmitted from another information apparatus, such as a personal computer, to the portable phone according to the present embodiment by (electronic) mail so that the mail addresses in the list are registered in the telephone directory unit. Further, the portable phone according to the present embodiment may be provided with the heretofore-mentioned registering methods switched upon each occasion.

After the destination mail address of the combined mail to be transmitted is thus set by the destination address setting unit 9, the combined mail formed by the mail combining unit 8 is transmitted to the destination mail address via the communication unit 1 (step S5).

Upon completion of the transmission of the combined mail, the mails selected by the received-mail selecting unit 7 as the mails to be combined are deleted by the mail deleting unit 10. For example, the selected mails may be deleted automatically upon completion of the transmission, or may be deleted after a dialogue prompting the user to judge whether or not to delete the selected mails is displayed on the display unit 5, and the user makes the judgment. Additionally, aside from the above-mentioned dialogue displayed on the display unit 5, other methods for causing the user to judge whether or not to delete the selected mails include providing a delete button on the key-in unit 3.

Besides, the mails may be immediately deleted by the mail deleting unit 10 according to the above-mentioned deleting manners. Alternatively, the above-mentioned temporary retention area, such as a trash box folder, may be provided in the storage unit 6 so that the mails may be temporarily retained within a capacity of the temporary retention area before actual deletion. In this case, when the storage unit 6 runs short of a storage area by receiving new mail, etc., the mail data retained in the temporary retention area is automatically deleted by an amount necessary for securing a storage area required in the storage unit 6. This method enables once deleted mail data to be read again, if the particular mail data is not deleted automatically. Additionally, since this method does not oppress the necessary storage area, this method imposes only a little influence on a processing capability of the CPU 2.

FIG.3 shows an example where the user is caused to judge whether or not to delete the selected mails.

After the combined mail is transmitted, and when the user keys in a judgment not to delete the mails selected by the received-mail selecting unit 7 as the mails to be combined (step S6; NO), the operations according to the flowchart shown in FIG.3 are ended, with the selected mails being still stored in the storage unit 6. When the user keys in a judgment to delete the selected mails (step S6; YES), the selected mails stored in the storage unit 6 are deleted by the mail deleting unit 10 (step S7), and then the operations according to the flowchart shown in FIG.3 are ended.

Besides, although the present embodiment describes that the selected mails are deleted after the transmission of the combined mail, the present invention is not limited thereto; the selected mails may be deleted after the formation of the combined mail. Further, the portable phone according to the present embodiment may be provided with a function of switching timings of the deletion according to a setting made by the user. Deleting the selected mails after the transmission of the combined mail increases a security of the mail transfer method, because mail data is not lost even when the transmission of the combined mail fails due to an error occurring in a communication line or in the information apparatus receiving the combined mail. Deleting the selected mails after the formation of the combined mail increases a processing speed of the mail transfer method, because the deletion of the selected mails are completed during a waiting time for a communication with the information apparatus receiving the combined mail.

Additionally, the present embodiment describes that the received-mail selecting unit 7 selects a plurality of mails from among the mails stored in the storage unit 6, and the mail combining unit 8 combines the selected mails so as to form one combined mail; however, when the user selects only one mail, the mail combining unit 8 may form a pair (a unit) of the header and the text of the mail into one combined mail. Also, when the user selects only one mail, the mail may be transmitted to another information apparatus from the communication unit 1 not via the mail combining unit 8.

In addition, the present embodiment describes that, in the case of selecting all of the mails stored in the storage unit 6 at one time, the received-mail selecting unit 7 specifies all of the mails as the selected mails; however, an all-received-mail selecting unit may be provide apart from the received-mail selecting unit 7. In this arrangement, depending on the choice made by the user between the voluntary select mode of selecting the mails one by one and the all-mail select mode of selecting all of the mails at one time, when the user chooses the voluntary select mode, the received-mail selecting unit 7 specifies the mails to be combined, and when the user chooses the all-mail select mode, the all-received-mail selecting unit specifies all of the mails as the mails to be combined.

Besides, the destination information apparatus to which the combined mail is transmitted may be a personal computer of the user or a mail server of an Internet provider, as long as the information apparatus comprises a larger-capacity storage medium than the terminal device (the portable phone) according to the present invention does, and can communicate with the terminal device according to the present invention. Further, the destination information apparatus is not limited to the above-mentioned information apparatuses, but may be various types of information apparatuses.

In addition, although the terminal device according to the present embodiment is described as the portable phone, the terminal device of the present invention is not limited thereto, but may be a PHS, a small-size portable terminal called PDA (Personal Digital Assistant), a portable personal computer, a telephone and a facsimile device, as long as the terminal device has a function of transmitting and receiving (electronic) mail.

The present invention is not limited to the specifically disclosed embodiments, and variations and modifications may be made without departing from the scope of the present invention.

The present application is based on Japanese priority application No. 2001-120085 filed on April 18, 2001, the entire contents of which are hereby incorporated by reference.

## Claims

1. A terminal device comprising:
a transmission and reception unit (1) transmitting and receiving a mail; and
a mail storage unit (6) storing the mails received by said transmission and reception unit (1),
**characterized by** further comprising:
a mail combining unit (8) combining a plurality of said mails stored in said mail storage unit (6) so as to form one combined mail,
wherein said transmission and reception unit (1) transmits said combined mail to an information apparatus.

2. The terminal device as claimed in claim 1, **characterized by** further comprising a received-mail selecting unit (7) voluntarily selecting at least one mail to be transmitted to said information apparatus from among said mails stored in said mail storage unit (6),
wherein said mail combining unit (8) combines a plurality of said mails selected by said received-mail selecting unit (7).

3. The terminal device as claimed in claim 1, **characterized by** further comprising a received-mail selecting unit (7) selecting all of said mails stored in said mail storage unit (6) at one time as mails to be transmitted to said information apparatus,
wherein said mail combining unit (8) combines all of said mails selected by said received-mail selecting unit (7).

4. The terminal device as claimed in claim 2 or 3, **characterized by** further comprising a mail deleting unit (10) deleting said mails selected by said received-mail selecting unit (7) from said mail storage unit (6).

5. The terminal device as claimed in one of claims 2 to 4, **characterized in that** said mail combining unit (8) combines a plurality of units of a header part and a text part of each of said mails selected by said received-mail selecting unit (7) so as to form said combined mail.

6. The terminal device as claimed in one of claims 1 to 5, **characterized by** further comprising a destination address setting unit (9) setting a destination mail address to which said transmission and reception unit (1) transmits said combined mail.

7. The terminal device as claimed in claim 6, **characterized by** further comprising a register unit storing mail addresses registered therein beforehand, the mail addresses being frequently used as said destination mail address,
wherein said destination address setting unit (9) selects said destination mail address from among said mail addresses registered in said register unit.

8. A method for transferring mail, **characterized by**:
a receiving step of receiving a mail;
a mail storing step of storing the mails received by said receiving step in a storage unit (6);
a mail combining step (S3) of combining a plurality of said mails stored in said storage unit (6) so as to form one combined mail; and
a transmitting step (S5) of transmitting said combined mail to an information apparatus.

9. The method as claimed in claim 8 **characterized by** a received-mail selecting step (S2) of voluntarily selecting at least one mail to be transmitted to said information apparatus from among said mails stored in said storage unit (6),
wherein said mail combining step (S3) combines a plurality of said mails selected by said received-mail selecting step (S2).

10. The method as claimed in claim 8, **characterized by** a received-mail selecting step of selecting all of said mails stored in said storage unit (6) at one time as mails to be transmitted to said information apparatus,
wherein said mail combining step (S3) combines all of said mails selected by said received-mail selecting step.

11. The method as claimed in claim 9 or 10, **characterized by** a mail deleting step (S7) of deleting said mails selected by said received-mail selecting step from said storage unit (6).

12. The method as claimed in one of claims 9 to 11, **characterized in that** said mail combining step (S3) combines a plurality of units of a header part and a text part of each of said mails selected by said received-mail selecting step so as to form said combined mail.

13. The method as claimed in one of claims 8 to 12, **characterized by** a destination address setting step (S4) of setting a destination mail address to which said transmitting step (S5) transmits said combined mail.

14. The method as claimed in claim 13, **characterized by** a registering step of registering mail addresses frequently used as said destination mail address beforehand,
wherein said destination address setting step (S4) selects said destination mail address from among said mail addresses registered by said registering step.

15. A computer program comprising program code means for instructing a computer system to carry out the steps according to any one of claims 8 to 14.
